# EUROPÄISCHE PATENTSCHRIFT

(11) **EP 1 590 379 B1**
(45) Veröffentlichungstag und Bekanntmachung des Hinweises auf die Patenterteilung: **26.07.2006**
(21) Anmeldenummer: 04705417.6
(22) Anmeldetag: 27.01.2004
(51) Int. Cl.: C08F 8/00, C08F 10/10, C08F 10/00

(54) **FUNKTIONALISIERUNG VON UNGESÄTTIGTEN ISOBUTENPOLYMEREN DURCH HYDROBORIERUNG**
ISOBUTENE POLYMER FUNCTIONALIZATION BY MEANS OF HYDROBORATION
FONCTIONNALISATION DE POLYMERES D'ISOBUTENE INSATURES, PAR HYDROBORATION

(30) Priorität: 28.01.2003 DE 10303275
(43) Veröffentlichungstag der Anmeldung: 02.11.2005
(73) Patentinhaber: BASF Aktiengesellschaft, 67056 Ludwigshafen (DE)
(72) Erfinder: LANG, Gabriele, 68167 Mannheim (DE); RATH, Hans, Peter, 67269 Grünstadt (DE); MACH, Helmut, 69115 Heidelberg (DE)
(74) Vertreter: Thalhammer, Wolfgang
(86) Internationale Anmeldenummer: PCT/EP2004/000689
(87) Internationale Veröffentlichungsnummer: WO 2004/067583

## Beschreibung

Die vorliegende Erfindung betrifft ein Verfahren zur Funktionalisierung von Isobutenpolymeren durch Hydroborierung, z.B. zur Herstellung hydroxyterminierter telecheler Polyisobutene.

Polyisobutene, die - im Falle linearer Polymere - an beiden Enden bzw. - im Falle sternförmiger Polymere - an allen Enden ihrer Äste Hydroxylgruppen tragen, sind wertvolle Verbindungen z.B. zur Herstellung von Polyurethanen. Es ist bekannt, Polyisobutene mit terminaler Unsättigung ("telechele Polyisobutenolefine") mit einem Hydroborierungsagens umzusetzen und das erhaltene Polyisobutenylboran mit einem Oxidationsmittel zu behandeln, wobei ein Alkohol erhalten wird, der dem anti-Markovnikov-Hydratisierungsprodukt des Olefins entspricht.

So offenbaren die US 4,316,973 und die US 4,342,849 die regioselektive Hydroborierung von α,ω-Di(isobutenyl)polyisobuten durch Umsetzung von terminal ungesättigtem Polyisobuten mit 9-Borabicyclo-[3.3.1]nonan (9-BBN). Das Hydroborierungsprodukt wird anschließend mit alkalischem Wasserstoffperoxid behandelt.

Die US 4,939,184 beschreibt die Herstellung eines Polyurethanschaums. Die Polyolkomponente ist ein polyhydroxyterminiertes Polyisobuten, das durch Hydroborierung von terminal ungesättigtem Polyisobuten mit Boran in Tetrahydrofuran und anschließende Oxidation mit alkalischem Wasserstoffperoxid erhalten wird.

Die US 5,242,983 beschreibt die Veresterung von Polyisobutentriol mit Methacryloylchlorid und die anschließende radikalische Polymerisation des Methacrylats mit Methylmethacrylat. Das Polyisobuten-triol wird durch Hydroborierung mit 9-BBN und alkalische Oxidation erhalten.

B. Ivan, J.P. Kennedy, V.S.C. Chang, J. Polym. Sci., Polym. Chem. 1980, 18, 3177-3191 beschreiben die Herstellung von α,ω-Di(3-hydroxyl-2-methylpropyl)polyisobuten durch Hydroborierung und anschließende alkalische Oxidation. Die Hydroborierung erfolgt mit einem Überschuss an 9-BBN oder Boran-Tetrahydrofuran. Es wird eine 2 gew.-%-ige Lösung des Polymers in Tetrahydrofuran eingesetzt.

B. Ivan, J.P. Kennedy, J. Polym. Sci., Polym. Chem. 1990, 28, 89-104 beschreiben die Hydroborierung von bis(allyl)terminiertem Polyisobuten mit 9-BBN in Tetrahydrofuran.

Die JP 3 115 402 offenbart die Hydroborierung von Polyisobuten mit einm Molgewicht von 2300 mit Natriumborhydrid und Bortrifluorid-Etherat in Tetrahydrofuran in Gegenwart von Catechol.

Die bekannten Verfahren haben bestimmte Nachteile. Bei Verwendung von Boran als Hydroborierungsagens bilden sich intermediär hochmolekulare Trialkylborane. Damit das Reaktionsgemisch niederviskos und rührbar bleibt, muß in hoher Verdünnung mit großen Lösungsmittelmengen gearbeitet werden. Vor allem im Falle polyfunktioneller Polyisobutene können die Trialkylborane auch kautschukartig vernetzen, was zur Bildung störender Niederschläge und Ablagerungen sowie Ausbeuteverlusten führt. Hydroborierungsagentien wie 9-BBN sind teuer und daher für großtechnische Verfahren ungeeignet. Außerdem steht pro mol Hydroborierungsagens nur ein Hydroborierungsäquivalent zur Verfügung.

Der Erfindung liegt die Aufgabe zu Grunde, ein Funktionalisierungsverfahren für Isobutenpolymere bereit zu stellen, das sich großtechnisch zur Verfügung stehender Chemikalien bedient und mit dem Isobutenpolymere unter Einsatz relativ geringer Mengen an Hydroborierungsagens und relativ geringer Lösungsmittelmengen im Wesentlichen quantitativ funktionalisiert werden können.

Erfindungsgemäß wird diese Aufgabe gelöst durch ein Verfahren zur Funktionalisierung von Isobutenpolymeren, bei dem man ein wenigstens eine terminale olefinische Unsättigung aufweisendes Isobutenpoymer mit einem Hydroborierungsagens umsetzt, wobei man als Hydroborierungsagens das Umsetzungsprodukt einer Boranquelle mit 0,5 bis 1,8, vorzugsweise 0,8 bis 1,5, Äquivalenten pro mol Boran, eines Alkens eines Molekulargewichts von weniger als 250, vorzugsweise 70 bis 200, verwendet oder das Isobutenpolymer in Gegenwart von 0,5 bis 1,8, vorzugsweise 0,8 bis 1,5, Äquivalenten des Alkens mit der Boranquelle umsetzt.

Das erfindungsgemäße Verfahren erlaubt die Hydroborierung hochmolekularer Isobutenpolymere in Gegenwart vergleichsweise geringer Mengen Lösungs- oder Verdünnungsmittel; das Reaktionsgemisch bleibt trotzdem niedrigviskos und gut rührbar. Das Verfahren gestattet außerdem einen effizienten Einsatz des Hydroborierungsagens.

Allgemeine Grundlagen der Hydroborierung sind in J. March, Advanced Organic Chemistry, 4. Auflage, Verlag John Wiley & Sons, S. 783-789 beschrieben, worauf hiermit Bezug genommen wird. Zu den geeigneten Boranquellen zählt vor allem Boran (BH₃) selbst. Dem Fachmann ist geläufig, dass Boran hauptsächlich in Form seines Dimeren, dem Diboran (B₂H₆) vorkommt. Der Begriff "Boran" soll für die Zwecke der Anmeldung das Dimere und die höheren Oligomeren des Borans umfassen. Die Stoffmenge bzw. Molzahl ist dabei auf die Formeleinheit BH₃ bezogen.

Zweckmäßigerweise wird das Boran in situ durch Umsetzung geeigneter Vorläufer, insbesondere von Alkalimetall- oder Erdalkalimetallsalzen des BH₄-Anions mit Bortrihalogeniden, erzeugt. Im Allgemeinen verwendet man Natriumborhydrid und Bortrifluorid-Etherat, da es sich hierbei um gut zugängliche und lagerfähige Substanzen handelt. Vorzugsweise handelt es sich bei der Boranquelle daher um eine Kombination von Natriumborhydrid und Bortrifluorid-Etherat.

Die Art der Substituenten an der Kohlenstoff-Kohlenstoff-Doppelbindung des Alkens ist nicht besonders kritisch, insbesondere bei den Ausführungsformen des Verfahrens, bei denen man das Alken gemeinsam mit dem Isobutenpolymer oder einer Teilmenge davon zur vorgelegten Boranquelle hinzufügt. Dazu eignen sich zum Beispiel 1-Penten, 1-Hexen, 2-Hexen, Cyclopenten oder Cyclohexen. Vorzugsweise trägt das Alken aber an seiner Kohlenstoff-Kohlenstoff-Doppelbindung drei von Wasserstoff verschiedene Substituenten. Geeignete Alkene lassen sich durch die Formel R¹R²C=CHR³ beschreiben, worin R¹, R² und R³ unabhängig voneinander für C₁-C₆-Alkyl stehen und R¹ und R³ auch gemeinsam für C₃-C₅-Alkylen stehen können. Besonders gGeeignete Alkene sind z.B. 2-Methyl-2-buten und 1-Methylcyclohexen.

In einer Ausführungsform wird die Boranquelle vorab mit dem Alken umgesetzt. Hierzu kann man die in situ-Herstellung der Boranquelle in Gegenwart des Alkens durchführen, indem man z. B. NaBH₄ gemeinsam mit dem Alken vorlegt und mit BF₃ versetzt.

In einer bevorzugten Ausführungsform setzt man das Isobutenpolymer in Gegenwart des Alkens mit der Boranquelle um. "Umsetzung in Gegenwart des Alkens" soll für die vorliegenden Zwecke bedeuten, dass das Alken zu einem beliebigen Zeitpunkt, jedoch vor dem vollständigen Umsatz des Isobutenpolymers mit der Boranquelle zum Reaktionsgemisch gegeben wird. So kann man etwa das Alken gleichzeitig mit dem Isobutenpolymer zu der vorgelegten Boranquelle hinzufügen. Alternativ kann man die Boranquelle mit einer Teilmenge des Isobutenpolymers, die geringer ist als die Menge, bei der pro Doppelbindung des Isobutenpolymers weniger als ein Äquivalent Boranquelle zur Verfügung steht, umsetzen und die Restmenge des Isobutenpolymers nach Zugabe des Alkens oder gleichzeitig mit dem Alken zugeben.

Üblicherweise setzt man das Hydroborierungsagens in einem Überschuss, z.B. dem 1,05- bis 2,5-fachen der stöchiometrisch erforderlichen Menge, gerechnet als Hydroborierungsäquivalente bezogen auf die zu hydroborierenden Doppelbindungen des Isobutenpolymers, ein. Die Hydroborierungsäquivalente werden erhalten, wenn man von der Stoffmenge der hydridischen Wasserstoffatome der Boranquelle die Stoffmenge des Alkens subtrahiert.

Üblicherweise führt man die Hydroborierung in einem Lösungsmittel durch. Geeignete Lösungsmittel für die Hydroborierung sind beispielsweise acyclische Ether wie Diethylether, Methyl-tert-butylether, Dimethoxyethan, Diethylenglykoldimethylether, Triethylenglykoldimethylether, cyclische Ether wie Tetrahydrofuran oder Dioxan sowie Kohlenwasserstoffe wie Hexan oder Toluol oder Gemische davon. Die Reaktionstemperatur wird von der Reaktivität der olefinischen Unsättigung im Isobutenpolymer und des Hydroborierungsagens bestimmt und liegt normalerweise zwischen dem Schmelz-und Siedepunkt des Reaktionsgemisches, vorzugsweise im Bereich von 0°C bis 60°C.

Üblicherweise werden die gebildeten Polyisobutenylborane nicht isoliert, sondern durch nachfolgende Umsetzung direkt in die gewünschten Wertprodukte überführt. Eine sehr bedeutsame Umsetzung ist die Behandlung der primären Hydroborierungsprodukte mit einem Oxidationsmittel, insbesondere alkalischem Wasserstoffperoxid, unter Erhalt eines Alkohols, der vorzugsweise formal dem Anti-Markovnikov-Hydratisierungsprodukt des ungesättigten Isobutenpolymers entspricht. Des Weiteren können die erhaltenen Polyisobutenylborane einer Umsetzung mit Brom in Gegenwart von Hydroxid-Ionen unter Erhalt des Bromids unterzogen werden.

Das eingesetzte Isobutenpolymer weist wenigstens eine terminale olefinische Unsättigung auf. Bei der olefinisch ungesättigte Gruppe kann es sich z.B. um aliphatische ungesättigte Gruppen mit 2 bis 6 Kohlenstoffatomen wie Vinyl, Allyl, Methylvinyl, Methallyl, Propenyl, 2-Methylpropenyl, Butenyl, Pentenyl, Hexenyl; oder cylische ungesättigte Kohlenwasserstoffreste wie Cyclopropenyl, Cyclobutenyl, Cyclopentenyl und Cylohexenyl, handeln. Bevorzugt sind Isobutenpolymere mit terminalen Allyl-, Methallyl-, 2-Methylpropenyl- oder Cyclopentenylgruppen. Für viele Anwendungen besonders wertvolle Funktionalisierungsprodukte werden erhalten, wenn das Isobutenpolymer eine Funktionalität von 1,8 bis 3 aufweist, d.h. 1,8 bis 3 terminale olefinische Unsättigungen pro Molekül enthält.

Das zahlenmittlere Molekulargewicht des Isobutenpolymers beträgt geeigneterweise 500 bis 50000, meist 1000 bis 20000.

Geeignete Isobutenpolymere können nach Verfahren hergestellt werden, die in den US 4,946,889, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. beschrieben sind. Die Isobutenpolymere werden durch lebende kationische Polymerisation von Isobuten hergestellt. Das eingesetzte Initiatorsystem umfasst in der Regel eine Lewis-Säure und einen "Inifer", d.h. eine organische Verbindung mit einer leicht verdrängbaren Austrittsgruppe, die mit der Lewis-Säure ein Carbokation oder einen kationogenen Komplex bildet. Der Inifer ist in der Regel ein tertiäres Halogenid, ein tertiärer Ester oder Ether oder eine Verbindung mit allyl-ständigem Halogenatom, allyl-ständiger Alkoxy- oder Acyloxygruppe. Das Carbokation oder der kationogene Komplex addieren sukzessive Isobutenmoleküle an das kationische Zentrum, wodurch sich eine wachsende Polymerkette ausbildet, deren Ende durch ein Carbokation oder die Austrittsgruppe des Inifers terminiert ist. Der Inifer kann mono- oder höherfunktionell sein, wobei im letzteren Fall Polymerketten in mehr als eine Richtung wachsen.

Isobutenpolymere mit terminaler Unsättigung können auf verschiedene Weise erhalten werden. Man kann von olefinisch ungesättigten Inifermolekülen ausgehen. Um Polyisobutenmoleküle mit mehr als einer terminalen Unsättigung pro Molekül zu erhalten, kann man am distalen Kettenende ebenfalls eine olefinische Unsättigung einführen oder zwei oder mehr lebende Polymerketten koppeln. Beide Möglichkeiten sind nachstehend näher erläutert.

Alternativ geht man von Inifermolekülen ohne olefinische Unsättigung aus und terminiert man das (die) distalen Kettenenden unter Ausbildung einer ethylenisch ungesättigten Gruppe, wobei man z.B. das reaktive Kettenende mit einem Terminierungsreagenz umsetzt, das an das Kettenende eine ethylenisch ungesättigte Gruppe anfügt, oder geeignet behandelt, um das reaktive Kettenende in eine solche Gruppe umzuwandeln.

Geeignete Inifermoleküle ohne olefinische Unsättigung lassen sich durch die Formel AYₙ darstellen, worin A für einen n-wertigen aromatischen Rest mit einem bis vier Benzolringen, die nicht anelliert sind, wie Benzol, Biphenyl oder Terphenyl, oder anelliert sind, wie Naphthalin, Anthracen, Phenanthren oder Pyren, oder einen n-wertigen aliphatischen linearen oder verzweigten Rest mit 3 bis 20 Kohlenstoffatomen steht. Y steht für C(R⁴)(R⁵)X, worin R⁴ und R⁵ unabhängig voneinander für Wasserstoff, C₁-C₄-Alkyl, insbesondere Methyl, oder Phenyl stehen und X für Halogen, C₁-C₆-Alkoxy oder C₁-C₆-Acyloxy steht, mit der Maßgabe dass R⁴ für Phenyl steht, wenn A für einen aliphatische Rest steht. n ist eine ganze Zahl von 1 bis 4, vorzugsweise 2 bis 4, insbesondere 2 oder 3. Geeignete Beispiele sind p-Dicumylchlorid, m-Dicumylchlorid oder 1,3,5-Tricumylchlorid.

Als Inifermoleküle mit olefinischer Unsättigung eignet sich z.B. eine Verbindung der Formel I 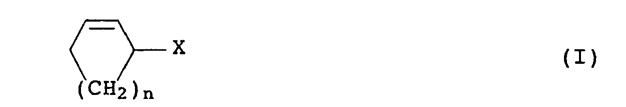 worin
X für Halogen, C₁-C₆-Alkoxy oder C₁-C₆-Acyloxy und
n für 1, 2 oder 3 steht.

Eine besonders geeignete Verbindung der Formel I ist 3-Chlorcyclopenten.

Als Lewis-Säure kommen kovalente Metallhalogenide und Halbmetallhalogenide, die eine Elektronenpaarlücke aufweisen, in Betracht. Sie sind in der Regel ausgewählt unter Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumdichloride und die Dialkylaluminiumchloride. Bevorzugte Lewis-Säuren sind Titantetrachlorid, Bortrichlorid, Bortrifluorid, Zinntetrachlorid, Aluminiumtrichlorid, Vanadiumpentachlorid, Eisentrichlorid, Alkylaluminiumdichloride und Dialkylaluminiumchloride. Besonders bevorzugte Lewis-Säuren sind Titantetrachlorid, Bortrichlorid und Bortrifluorid und insbesondere Titantetrachlorid.

Es hat sich bewährt, die Polymerisation in Gegenwart eines Elektronendonors durchzuführen. Als Elektronendonoren kommen aprotische organische Verbindungen in Betracht, die ein an einem Stickstoff, Sauerstoff oder Schwefelatom befindliches, freies Elektronenpaar aufweisen. Bevorzugte Donorverbindungen sind ausgewählt unter Pyridinen wie Pyridin selbst, 2,6-Dimethylpyridin, sowie sterisch gehinderten Pyridinen wie 2,6-Diisopropylpyridin und 2,6-Di-tert-butylpyridin; Amiden, insbesondere N,N-Dialkylamiden von aliphatischen oder aromatischen Carbonsäuren wie N,N-Dimethylacetamid; Lactamen, insbesondere N-Alkyllactamen wie N-Methylpyrrolidon; Ethern, z.B. Dialkylethern wie Diethylether und Diisopropylether, cyclischen Ethern, wie Tetrahydrofuran; Aminen, insbesondere Trialkylaminen wie Triethylamin; Estern, insbesondere C₁-C₄-Alkylestern aliphatischer C₁-C₆-Carbonsäuren wie Ethylacetat; Thioethern, insbesondere Dialkylthioethern oder Alkylarylthioethern, wie Methylphenylsulfid; Sulfoxiden, insbesondere Dialkylsulfoxiden, wie Dimethylsulfoxid; Nitrilen, insbesondere Alkylnitrilen wie Acetonitril und Propionitril; Phosphinen, insbesondere Trialkylphosphinen oder Triarylphosphinen, wie Trimethylphosphin, Triethylphosphin, Tri-n-butylphosphin und Triphenylphosphin und nicht polymerisierbaren, aprotischen siliziumorganischen Verbindungen, die wenigstens einen über Sauerstoff gebundenen organischen Rest aufweisen. Unter den vorgenannten Donoren sind Pyridin und sterisch gehinderte Pyridin-Derivate sowie insbesondere siliziumorganische Verbindungen, wie Dimethoxydiisopropylsilan, Dimethoxyisobutylisopropylsilan, Dimethoxydi-isobutylsilan, Dimethoxydicyclopentylsilan, Dimethoxyisobutyl-2-butylsilan, Diethoxyisobutylisopropylsilan, Triethoxytoluylsilan, Triethoxybenzylsilan und Triethoxyphenylsilan, bevorzugt.

Die Lewis-Säure wird in einer Menge eingesetzt, die zur Bildung des Initiatorkomplexes ausreicht. Das Molverhältnis von Lewis-Säure zu Initiator beträgt im Allgemeinen 10:1 bis 1:10, insbesondere 1:1 bis 1:4 und speziell 1:1,5 bis 1:4.

Als Isobuten-Quellen zur Herstellung des Isobutenpolymers eignen sich sowohl Isobuten selbst als auch isobutenhaltige C₄-Kohlenwasserstoffströme, beispielsweise C₄-Raffinate,
C₄-Schnitte aus der Isobuten-Dehydrierung, C₄-Schnitte aus Steamcrackern, FCC-Crackern (FCC: Fluid Catalyzed Cracking), sofern sie weitgehend von darin enthaltenem 1,3-Butadien befreit sind.

Neben Isobuteneinheiten kann das Isobutenpolymer auch Einheiten von olefinisch ungesättigten Monomeren, welche mit Isobuten unter kationischen Polymerisationsbedingungen copolymerisierbar sind, enthalten. Die Comonomere können statistisch im Polymer verteilt oder als Blöcke angeordnet sein. Der Isobutenanteil im Isobutenpolymer beträgt vorzugsweise mehr als 80 Gew.-%, insbesondere mehr als 90 Gew.-%, und, besonders bevorzugt, mehr als 95 Gew.-%.

Als copolymerisierbare Monomere kommen Vinylaromaten wie Styrol und α-Methylstyrol, C₁-C₄-Alkylstyrole wie 2-, 3- und 4-Methylstyrol, sowie 4-tert.-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2.

Die Polymerisation wird üblicherweise in einem Lösungsmittel durchgeführt, wie aliphatischen Kohlenwasserstoffen, z.B. Ethan, Iso- und n-Propan, n-Butan und seine Isomeren, n-Pentan und seine Isomeren, n-Hexan und seine Isomeren, Cyclopentan, Methylcyclopentan, Cyclohexan, Methylcyclohexan, Cycloheptan, Ethen, Iso-und n-Propen, n-Buten, n-Penten, n-Hexen und n-Hepten, Cyclopenten, Cyclohexen und Cyclohepten, aromatischen Kohlenwasserstoffen wie Toluol, Xylol, Ethylbenzol, sowie halogenierten Kohlenwasserstoffen, wie halogenierte aliphatische Kohlenwasserstoffe, z.B. wie Chlormethan, Dichlormethan, Trichlormethan, Chlorethan, 1,2-Dichlorethan und 1,1,1-Trichlorethan und 1-Chlorbutan, sowie halogenierte aromatische Kohlenwasserstoffe wie Chlorbenzol und Fluorbenzol. Besonders bewährt haben sich Gemische aliphatischer oder aromatischer Kohlenwasserstoffe mit halogenierten Kohlenwasserstoffen, wie Dichlormethan/n-Hexan, Dichlormethan/Cyclohexan, Dichlormethan/Toluol, Chlormethan/n-Hexan und dergleichen.

In der Regel führt man die Polymerisation bei Temperaturen unterhalb 0°C, z.B. im Bereich von 0 bis -140°C durch. Der Reaktionsdruck ist von untergeordneter Bedeutung.

Um am distalen Kettenende eine olefinische Unsättigung einzuführen, setzt man das reaktive Kettenende mit einem Terminierungsreagenz um, das an das Kettenende eine olefinisch ungesättigte Gruppe anfügt, oder behandelt das reaktive Kettenende geeignet, um es in eine solche Gruppe umzuwandeln.

In der einfachsten Ausführungsform wird das Kettenende einer Dehydrohalogenierungsreaktion unterworfen, z.B. durch thermische Behandlung, beispielsweise durch Erwärmen auf eine Temperatur von 70 bis 200°C, oder durch Behandlung mit einer Base. Geeignete Basen sind z.B. Alkalimetallalkoxide, wie Natriummethanolat, Natriumethanolat und Kalium-tert-Butanolat, basisches Aluminiumoxid, Alkalimetallhydroxide, wie Natriumhydroxid, und tertiäre Amine, wie Pyridin oder Tributylamin, vgl. Kennedy et al., Polymer Bulletin 1985, 13, 435-439. Bevorzugt wird Natriumethanolat verwendet.

Alternativ wird das Kettenende durch Zugabe einer Trialkylallylsilanverbindung, z.B. Trimethylallylsilan, terminiert. Die Verwendung der Allylsilane führt zum Abbruch der Polymerisation unter Einführung eines Allylrestes am Polymerkettenende, vgl. EP 264 214.

In einer weiteren Ausführungsform wird das reaktive Kettenende mit einem konjugierten Dien, wie Butadien (vgl. DE-A 40 25 961) oder einem nich konjugierten Dien wie 1,9-Decadien oder einem Alkenyloxystyrol wie p-Hexenyloxystyrol (vgl. JP-A-4-288309) umgesetzt.

In einer weiteren Ausführungsform werden durch Zusatz eines Kopplungsmittels zwei oder mehrere lebende Polymerketten gekoppelt. "Kopplung" bedeutet die Ausbildung von chemischen Bindungen zwischen den reaktiven Kettenenden, so dass zwei oder mehrere Polymerketten zu einem Molekül verbunden werden. Die durch Kopplung erhaltenen Moleküle sind symmetrische telechele oder sternförmige Moleküle mit Gruppen des Inifers, z.B. Cyclopentenylgruppen, an den Molekülenden bzw. den Enden der Äste des sternförmigen Moleküls.

Geeignete Kopplungsmittel weisen beispielsweise wenigstens zwei allylständig zur gleichen oder verschiedenen Doppelbindungen angeordnete elektrofuge Austrittsgruppen, z.B. Trialkylsilylgruppen, auf, so dass sich das kationische Zentrum eines reaktiven Kettenendes in einer konzertierten Reaktion unter Abspaltung der Austrittsgruppe und Verschiebung der Doppelbindung anlagern kann. Andere Kopplungsmittel weisen wenigstens ein konjugiertes System auf, an das sich das kationische Zentrum eines reaktiven Kettenendes unter Ausbildung eines stabilisierten Kations elektrophil addieren kann. Durch Abspaltung einer Austrittsgruppe, z.B. eines Protons, entsteht dann unter Rückbildung des konjugierten Systems eine stabile σ-Bindung zu der Polymerkette. Mehrere dieser konjugierten Systeme können durch inerte Spacer miteinander verbunden sein.

Zu den geeigneten Kopplungsmitteln zählen:
(i) Verbindungen, die wenigstens zwei 5-gliedrige Heterocyclen mit einem unter Sauerstoff, Schwefel und Stickstoff ausgewählten Heteroatom aufweisen, z.B. organische Verbindungen, die wenigstens zwei Furanringe aufweisen, wie 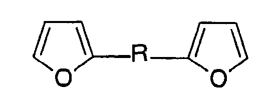 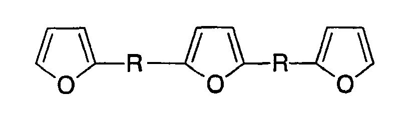 worin R für C₁-C₁₀-Alkylen steht, vorzugsweise Methylen oder 2,2-Propandiyl;
(ii) Verbindungen mit wenigstens zwei allylständigen Trialkylsilylgruppen, wie 1,1-Bis(trialkylsilylmethyl)ethylene, z.B. 1,1-Bis(trimethylsilylmethyl)ethylen,
   Bis[(trialkylsilyl)-propenyl]benzole z.B. 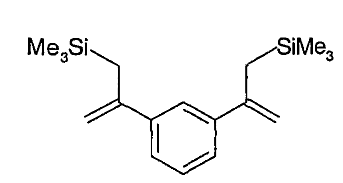 (worin Me für Methyl steht),
(iii) Verbindungen mit wenigstens zwei konjugiert zu jeweils zwei aromatischen Ringen angeordneten Vinylidengruppen, wie Bis-diphenylethylene z.B.

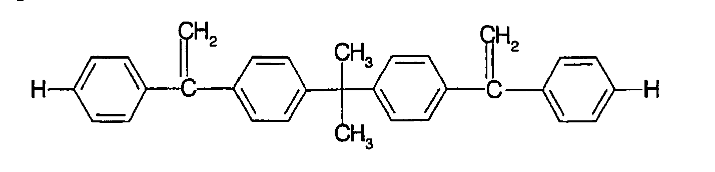

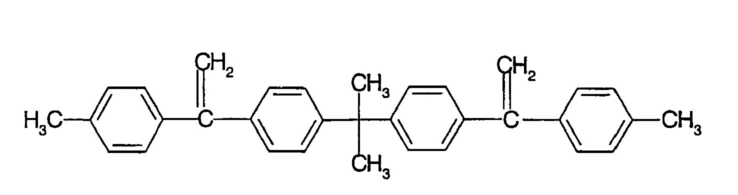

Eine Beschreibung geeigneter Kopplungsmittel findet sich in folgenden Literaturstellen; die Kopplungsreaktion kann in analoger Weise zu den dort beschriebenen Umsetzungen durchgeführt werden: R. Faust, S. Hadjikyriacou, Macromolecules 2000, 33, 730-733; R. Faust, S. Hadjikyriacou, Macromolecules 1999, 32, 6393-6399; R. Faust, S. Hadjikyriacou, Polym. Bull. 1999, 43, 121-128; R. Faust, Y. Bae, Macromolecules 1997, 30, 198; R. Faust, Y. Bae, Macromolecules 1998, 31, 2480; R. Storey, Maggio, Polymer Preprints 1998, 39, 327-328; WO99/24480; US 5,690,861 und US 5,981,785.

Die Kopplung erfolgt in der Regel in Gegenwart einer Lewis-Säure, wobei sich solche Lewis-Säuren eignen, die auch zur Durchführung der eigentlichen Polymerisationsreaktion verwendbar sind. Zur Durchführung der Kopplungsreaktion sind außerdem auch die gleichen Lösungsmittel und Temperaturen geeignet, wie man sie zur Durchführung der eigentlichen Polymerisationsreaktion einsetzt. Zweckmäßigerweise kann man die Kopplung daher als Eintopfreaktion im Anschluß an die Polymerisationsreaktion im gleichen Lösungsmittel in Gegenwart der zur Polymerisation eingesetzten Lewis-Säure durchführen.

Die folgenden Beispiele sollen die Erfindung näher veranschaulichen.

Die terminalen Hydroxygruppen wurden wie folgt bestimmt:

Im ¹H-NMR-Spektrum kann zwischen den Protonen des Inifers, der Endgruppe (CH₂OH) und denen der Hauptkette unterschieden werden. Aus dem Intensitätsverhältnis der Resonanzen lässt sich die Anzahl der OH-Gruppen pro mol Polymer bestimmen. Die OH-Zahl [mg KOH/g] wurde durch Umsetzen mit Essigsäureanhydrid und anschließende Titration mit Kaliumhydroxidlösung bestimmt.

### Beispiel 1

In einem 41-Dreihalskolben mit Rührer, Kühler und Tropftrichter wurden 100 mmol NaBH₄ und 140 mmol 2-Methyl-2-buten in 500 ml Tetrahydrofuran vorgelegt und bei Raumtemperatur tropfenweise mit 130 mmol BF₃-Etherat versetzt. Nach einstündigem Rühren bei Raumtemperatur wurde eine Lösung von 472 g eines telechelen olefinisch terminierten Polyisobutens (Mₙ = 4550) (hergestellt ausgehend von 1,3-Dicumylchlorid, terminiert mit -C(CH₃)=CH₂) in 800 ml Tetrahydrofuran zugetropft. Man rührte 3 Stunden bei Raumtemperatur und zerstörte dann überschüssiges Hydrid durch vorsichtige Zugabe von 80 ml Wasser. Nach Zugabe von 100 ml 3N NaOH wurde bei 40 °C durch Zugabe von 80 g 30 %-igem Wasserstoffperoxid oxidiert. Nach weiteren 2 Stunden Rühren bei Raumtemperatur wurde das Reaktionsprodukt isoliert. Das GPC ist innerhalb der Fehlergrenze identisch mit dem des Ausgangsproduktes (Mₙ = 4550, M_{w}/Mₙ = 1,37). Aus dem ¹H-NMR-Spektrum ließ sich ein Funktionalisierungsgrad von 1,8 ermitteln; die OH-Zahl betrug 22.

### Beispiel 2

In einem 41-Dreihalskolben mit Rührer, Kühler und Tropftrichter wurden 130 ml einer 1-molaren Lösung von BH₃ in Tetrahydrofuran und 140 mmol 2-Methyl-2-buten in 350 ml Tetrahydrofuran vorgelegt. Anschließend wurde eine Lösung von 471 g eines telechelen olefinisch terminierten Polyisobutens (Mₙ = 4550) in 800 ml Tetrahydrofuran zugetropft. Man rührte 3 Stunden bei Raumtemperatur und zerstörte dann überschüssiges Hydrid durch vorsichtige Zugabe von 80 ml Wasser. Nach Zugabe von 100 ml 3N NaOH wurde bei 40 °C durch Zugabe von 80 g 30 %-igem Wasserstoffperoxid oxidiert. Nach weiteren 2 Stunden Rühren bei Raumtemperatur wurde das Reaktionsprodukt isoliert. Das GPC ist innerhalb der Fehlergrenze identisch mit dem des Ausgangsproduktes (Mₙ = 4550, M_{w}/Mₙ = 1,37). Aus dem ¹H-NMR-Spektrum ließ sich ein Funktionalisierungsgrad von 1,8 ermitteln; die OH-Zahl betrug 22.

### Beispiel 3

In einem 41-Dreihalskolben mit Rührer, Kühler und Tropftrichter wurden 188 mmol NaBH₄ und 275 mmol 1-Methyl-1-cyclohexen in 500 ml Tetrahydrofuran vorgelegt und bei Raumtemperatur tropfenweise mit 250 mmol BF₃-Etherat versetzt. Nach einstündigem Rühren bei Raumtemperatur wurde eine Lösung von 470 g (100 mmol) eines telechelen olefinisch terminierten Polyisobutens (Mₙ = 4550) in 800 ml Tetrahydrofuran zugetropft. Man rührte 3 Stunden bei Raumtemperatur und zerstörte dann überschüssiges NaBH₄ durch vorsichtige Zugabe von 80 ml Wasser. Nach Zugabe von 100 ml 3N NaOH wurde bei 40 °C durch Zugabe von 80 g 30 %-igem Wasserstoffperoxid oxidiert. Nach weiteren 2 Stunden Rühren bei Raumtemperatur wurde das Reaktionsprodukt isoliert. Das GPC ist innerhalb der Fehlergrenze identisch mit dem des Ausgangsproduktes (Mₙ = 4550, M_{w}/Mₙ = 1,37D). Aus dem ¹H-NMR-Spektrum ließ sich ein Funktionalisierungsgrad von 1,9 ermitteln; die OH-Zahl betrug 23.

### Beispiel 4

In einem 41-Dreihalskolben mit Rührer, Kühler und Tropftrichter wurden 100 mmol NaBH₄ in 500 ml Tetrahydrofuran vorgelegt und bei Raumtemperatur tropfenweise mit 130 mmol BF₃-Etherat versetzt. Nach einstündigem Rühren bei Raumtemperatur wurde eine Lösung von 472 g eines telechelen olefinisch terminierten Polyisobutens (Mₙ = 4550) (hergestellt ausgehend von 1,3-Dicumylchlorid, terminiert mit -C(CH₃)=CH₂) und 140 mmol 1-Methyl-1-cyclohexen in 800 ml Tetrahydrofuran gemeinsam zugetropft. Man rührte 3 Stunden bei Raumtemperatur und zerstörte dann überschüssiges Hydrid durch vorsichtige Zugabe von 80 ml Wasser. Nach Zugabe von 100 ml 3N NaOH wurde bei 40 °C durch Zugabe von 80 g 30 %-igem Wasserstoffperoxid oxidiert. Nach weiteren 2 Stunden Rühren bei Raumtemperatur wurde das Reaktionsprodukt isoliert. Das GPC ist innerhalb der Fehlergrenze hinsichtlich Molekulargewicht Mₙ und M_{w} identisch mit dem des Ausgangsproduktes (Mₙ = 4550, M_{w}/Mₙ = 1,21). Aus dem ¹H-NMR-Spektrum ließ sich ein Funktionalisierungsgrad von 1,9 ermitteln; die OH-Zahl betrug 23.

### Beispiel 5

In einem 41-Dreihalskolben mit Rührer, Kühler und Tropftrichter wurden 85 mmol NaBH₄ in 500 ml Terahydrofuran vorgelegt und bei Raumtemperatur tropfenweise mit 111 mmol BF₃-Etherat versetzt. Nach einstündigem Rühren bei Raumtemperatur wurde eine Lösung von 150 g eines telechelen olefinisch terminierten Polyisobutens (Mₙ = 4550) (hergestellt ausgehend von 1,3-Dicumylchlorid, terminiert mit -C(CH₃)=CH₂) in 400 ml Tetrahydrofuran, dann eine Lösung von 322 g des gleichen PIB und 95 mmol 1-Methyl-1-cyclohexen in 400 ml Tetrahydrofuran zugetropft. Man rührte 3 Stunden bei Raumtemperatur und zerstörte dann überschüssiges Hydrid durch vorsichtige Zugabe von 80 ml Wasser. Nach Zugabe von 100 ml 3N NaOH wurde bei 40 °C durch Zugabe von 80 g 30 %-igem Wasserstoffperoxid oxidiert. Nach weiteren 2 Stunden Rühren bei Raumtemperatur wurde das Reaktionsprodukt isoliert. Das GPC ist innerhalb der Fehlergrenze hinsichtlich Molekulargewicht Mₙ und M_{w} identisch mit dem des Ausgangsproduktes (Mₙ = 4550, M_{w}/Mₙ = 1,21). Aus dem ¹H-NMR-Spektrum ließ sich ein Funktionalisierungsgrad von 1,9 ermitteln; die OH-Zahl betrug 23.

### Vergleichsbeispiel

In einem 41-Dreihalskolben mit Rührer, Kühler und Tropftrichter wurden 180 ml einer 1-molaren Lösung von BH₃ in Tetrahydrofuran vorgelegt. Anschließend wurde eine Lösung von 420 g eines telechelen olefinisch terminierten Polyisobutens (Mₙ = 3000) in 1 1 Tetrahydrofuran bei 0 °C innerhalb von 25 min zugetropft. Man rührte 4 Stunden bei Raumtemperatur und zerstörte dann überschüssiges Hydrid durch vorsichtige Zugabe von 40 ml Wasser. Nach Zugabe von 50 ml 3N NaOH wurde bei 40 °C durch Zugabe von 40 g 30 %-igem Wasserstoffperoxid oxidiert. Nach einstündigem Rühren wurde das Reaktionsprodukt durch wässrige Aufarbeitung gereinigt und anschließend charakterisiert. Ein Vergleich der GPC-Kurven vor und nach der Hydroborierung zeigt eine Verbreiterung der Molekulargewichtsverteilung und einen Anstieg des Molekulargewichts Mₙ. Diese Beobachtungen deuten auf Di- und Trimerisierung der Telechele hin.

## Patentansprüche

1. Verfahren zur Funktionalisierung von Isobutenpolymeren, bei dem man ein wenigstens eine terminale olefinische Unsättigung aufweisendes Isobutenpoymer mit einem Hydroborierungsagens umsetzt, wobei man als Hydroborierungsagens das Umsetzungsprodukt einer Boranquelle mit 0,5 bis 1,8 Aquivalenten pro mol Boran, eines Alkens eines Molekulargewichts von weniger als 250 verwendet, oder das Isobutenpolymer in Gegenwart von 0,5 bis 1,8 Äquivalenten des Alkens mit der Boranquelle umsetzt.

2. Verfahren nach Anspruch 1, wobei das Alken an seiner Kohlenstoff-Kohlenstoff-Doppelbindung drei von Wasserstoff verschiedene Substituenten trägt.

3. Verfahren nach Anspruch 2, wobei es sich bei dem Alken um 2-Methyl-2-buten und/oder 1-Methylcyclohexen handelt.

4. Verfahren nach einem der Anspruch 1 bis 3, **dadurch gekennzeichnet, dass** es sich bei der Boranquelle um eine Kombination von Natriumborhydrid und Bortrifluorid-Etherat handelt.

5. Verfahren nach einem der vorhergehenden Ansprüche, wobei man das primäre Hydroborierungsprodukt mit einem Oxidationsmittel behandelt.

6. Verfahren nach Anspruch 5, wobei es sich bei dem Oxidationsmittel um Wasserstoffperoxid in alkalischem Medium handelt.

7. Verfahren nach einem der vorhergehenden Ansprüche, wobei das Isobutenpolymer 1,8 bis 3 terminale olefinische Unsättigungen aufweist.

8. Verfahren nach einem der vorhergehenden Ansprüche, bei dem man das Alken gleichzeitig mit dem Isobutenpolymer zu der vorgelegten Boranquelle hinzufügt.

9. Verfahren nach einem der Ansprüche 1 bis 7, bei dem man die Boranquelle mit einer Teilmenge des Isobutenpolymers, die geringer ist als die Menge, bei der pro Doppelbindung des Isobutenpolymers weniger als ein Äquivalent Boranquelle zur Verfügung steht, umsetzt und die Restmenge des Isobutenpolymers nach Zugabe des Alkens oder gleichzeitig mit dem Alken zugibt.

## Claims

1. A process for functionalizing isobutene polymers by reacting an isobutene polymer having at least one terminal olefinic unsaturation with a hydroborating agent, wherein the hydroborating agent used is the reaction product of a borane source with from 0.5 to 1.8 equivalents of an alkene having a molecular weight of less than 250 per mole of borane, or by reacting the isobutene polymer with the borane source in the presence of 0.5 to 1.8 equivalents of the alkene.

2. A process as claimed in claim 1, wherein the carbon-carbon double bond of the alkene bears three substituents other than hydrogen.

3. A process as claimed in claim 2, wherein the alkene is 2-methyl-2-butene and/or 1-methylcyclohexene.

4. A process as claimed in any of claims 1 to 3, wherein the borane source is a combination of sodium borohydride and boron trifluoride etherate.

5. A process as claimed in any of the preceding claims, wherein the primary hydroboration product is treated with an oxidizing agent.

6. A process as claimed in claim 5, wherein the oxidizing agent is hydrogen peroxide in an alkaline medium.

7. A process as claimed in any of the preceding claims, wherein the isobutene polymer has from 1.8 to 3 terminal olefinic unsaturations.

8. A process as claimed in any of the preceding claims, wherein the alkene is added to the initially charged borane source simultaneously with the isobutene polymer.

9. A process as claimed in claims 1 to 7, wherein the borane source is reacted with an aliquot of the isobutene polymer that is less than the amount at which less than an equivalent of borane source is available per double bond of the isobutene polymer, and the remaining quantity of the isobutene polymer is added after the admixture of the alkene or simultaneouly with the alkene.

## Revendications

1. Procédé de fonctionnalisation de polymères d'isobutène dans lequel on fait réagir un polymère d'isobutène présentant au moins une insaturation oléfinique terminale avec un agent d'hydroboration, en utilisant, comme agent d'hydroboration, le produit de la réaction d'une source de borane avec 0,5 à 1,8 équivalent, par mole de borane, d'un alcène ayant un poids moléculaire inférieur à 250, ou on fait réagir le polymère d'isobutène avec la source de borane en présence de 0,5 à 1,8 équivalent de l'alcène.

2. Procédé suivant la revendication 1, dans lequel l'alcène porte sur sa double liaison carbone-carbone trois substituants différents de l'hydrogène.

3. Procédé suivant la revendication 2, dans lequel, pour ce qui concerne l'alcène, il s'agit de 2-méthyl-2-butène et/ou de 1-méthylcyclohexène.

4. Procédé suivant l'une des revendications 1 à 3, **caractérisé en ce que**, pour ce qui concerne la source de borane, il s'agit d'une combinaison d'hydrure de bore et sodium et d'éthérate de trifluorure de bore.

5. Procédé suivant l'une des revendications précédentes, dans lequel on traite le produit d'hydroboration primaire avec un oxydant.

6. Procédé suivant la revendication 5, dans lequel, pour ce qui concerne l'oxydant, il s'agit de peroxyde d'hydrogène en milieu alcalin.

7. Procédé suivant l'une des revendications précédentes, dans lequel le polymère d'isobutène présente 1,8 à 3 insaturations oléfiniques terminales.

8. Procédé suivant l'une des revendications précédentes, dans lequel, à la source de borane préalablement introduite, on ajoute l'alcène simultanément au polymère d'isobutène.

9. Procédé suivant l'une des revendications 1 à 7, dans lequel on fait réagir la source de borane avec une quantité partielle du polymère d'isobutène qui est plus faible que la quantité pour laquelle moins d'un équivalent de source de borane est disponible par double liaison du polymère d'isobutène et on ajoute la quantité restante du polymère d'isobutène après addition de l'alcène ou simultanément à l'alcène.
